# EUROPÄISCHE PATENTSCHRIFT

(11) **EP 0 773 131 B1**
(45) Veröffentlichungstag und Bekanntmachung des Hinweises auf die Patenterteilung: **21.11.2001**
(21) Anmeldenummer: 96115416.8
(22) Anmeldetag: 26.09.1996
(51) Int. Cl.: B60L 11/18, B60L 11/02

(54) **Verfahren zur Ermittlung eines Last-Sollwertes für ein lastabhängiges Stromerzeugungssystem in einem Elektrofahrzeug**
Method for determining the setpoint value of a load for a load-dependent power system within an electric vehicle
Méthode pour la détermination de la valeur de consigne d'une charge pour une système d'alimentation dépendant de la charge dans un véhicule électrique

(30) Priorität: 08.11.1995 DE 19541575
(43) Veröffentlichungstag der Anmeldung: 14.05.1997
(73) Patentinhaber: XCELLSIS GmbH, 73230 Kirchheim / Teck-Nabern (DE)
(72) Erfinder: Sonntag, Josef, 89257 Illertissen (DE)
(74) Vertreter: Kocher, Klaus-Peter

(56) Entgegenhaltungen:
- EP-A- 0 645 278
- WO-A-90/13454
- WO-A-94/07301
- DE-C- 4 322 765

## Beschreibung

Die Erfindung betrifft ein Verfahren zur Ermittlung eines Lasc-Sollwertes für ein lastabhängiges Stromerzeugungssystem, insbesondere ein Brennstoffzellensystem, in einem Elektrofahrzeug gemäß dem Oberbegriff des Patentanspruchs 1.

Aus der DE 43 22 765 C1 ist ein Verfahren zur dynamischen Regelung der Leistung einer elektrischen Antriebseinheit in einem Fahrzeug bekannt, die von einer im Fahrzeug angeordneten Brennstoffzelle mit elektrischer Energie versorgt wird. Ausgehend von einer Leistungsanforderung, die aus der Fahrpedalstellung ermittelt wird, wird der Luftmassenstrom, der zur Bereitstellung dieser Solleistung seitens der Brennstoffzelle benötigt wird, in Abhängigkeit von der momentanen Drehzahl des Elektro-Fahrmotors anhand von Kennfeldern ermittelt und durch eine Regelung der Drehzahl eines in der Luftansaugleitung angeordneten Kompressor eingestellt.

Nachteilig bei diesem System ist, daß ein Abgleich der Kennfelder anhand von Tests notwendig ist, um den Fahrantrieb und das Brennstoffzellensystem aufeinander abzustimmen. Nachteilig ist außerdem, daß die Luftversorgung der Brennstoffzelle einem bestehenden Leistungs- beziehungsweise Stromistwert des Fahrantriebs zeitversetzt angepaßt wird, wodurch bei Beschleunigungsvorgängen eine Luftunterversorgung der Brennstoffzelle entsteht und somit die Wahrscheinlichkeit für Leistungseinbrüche steigt.

Aus der EP 0 645 278 A1 ist weiterhin ein gattungsgemäßes Verfahren zur Ermittlung eines Last-Sollwertes für ein aus einer Brennkraftmaschine und einem Generator bestehenden Stromerzeugungssystem in einem Hybrid-Elektrofahrzeug bekannt, wobei zusätzlich eine Batterie zur Zwischenspeicherung der elektrischen Energie vorgesehen ist. Hierbei wird ausgehend von einer Fahrpedalanforderung mit Hilfe eines Steuergerätes die Motorstrangströme des Elektrofahrmotors eingestellt. Gleichzeitig wird mit Hilfe des Steuergerätes ausgehend vom gemessenen Strom beziehungsweise der Spannung im Elektrofahrmotor die Betriebsweise, insbesondere die Last des Stromerzeugungsystems zur Einhaltung eines vorgegebenen Ladezustandes der Batterie festgelegt.

Es ist daher die Aufgabe der Erfindung, ein Verfahren zur Ermittlung eines Last-Sollwertes für ein lastabhängiges Stromerzeugungssystem in einem Elektrofahrzeug mit verbesserter Dynamik zu schaffen.

Die Aufgabe wird durch die Merkmale des Patentanspruchs 1 gelöst.

Die Generierung eines Strom-Sollwertes direkt im Fahrmotor-Wechselrichter weist den Vorteil auf, daß zum einen die Abstimmung der Strom- beziehungsweise Leistungskennfelder entfällt. Zum anderen wird das Fahrverhalten dadurch verbessert, daß durch die vorgelagerte Luftversorgung eine Fahrpedalbegrenzung beim Beschleunigen nicht mehr auftritt und daß die Zahl der Zellspannungsalarme verringert wird.

Weitere Vorteile und Ausgestaltungen der Erfindung gehen aus den Unteransprüchen und der Beschreibung hervor. Die Erfindung ist nachstehend anhand einer Zeichnung näher beschrieben, wobei
- Fig. 1: eine Prinzipdarstellung einer Brennstoffzelle und
- Fig. 2: eine Prinzipdarstellung einer Antriebsregelung für einen Elektro-Fahrmotor mit integrierter Sollwertgenerierung zeigt.

Für Fahrzeuge, die von einem Elektro-Fahrmotor angetrieben werden, gibt es unterschiedliche Ansätze zur Bereitstellung der jeweils benötigten elektrischen Energie. Zum einen werden Batterien eingesetzt, die die benötigte elektrische Energie zwischenspeichern. Die elektrische Energie kann hierbei entweder außerhalb des Fahrzeugs erzeugt und über einen Ladevorgang der Batterie zugeführt werden oder mit Hilfe eines Stromerzeugungssystems direkt im Fahrzeug erzeugt werden. Die jeweilige Leistung des Stromerzeugungssystems ist bei diesem System innerhalb eines weiten Bereichs unkritisch, da durch die Pufferwirkung der Batterie die Leistung des Stromerzeugungssystems von der Motorleistung entkoppelt ist.

Eine weitere Möglichkeit besteht darin, die elektrische Energie im Fahrzeug zu erzeugen und dem Elektro-Fahrmotor ohne Zwischenschaltung einer Pufferbatterie zuzuführen. Um hierbei eine gute Energieausnutzung zu gewährleisten muß jedoch die Leistung des Stromerzeugungssystems möglichst optimal an den jeweiligen momentanen Strombedarf des Elektro-Fahrmotors angepaßt werden. Hierzu muß laufend ein Sollwert für die Leistung des Stromerzeugungssystems generiert und die Leistung des Stromerzeugungssystems dann entsprechend gesteuert oder geregelt werden. Um eine gute Fahrdynamik zu erhalten muß die Sollwertgenerierung und die anschließende Steuerung oder Regelung des Stromerzeugungssystems entsprechend schnell erfolgen.

Ein bekanntes lastabhängiges Stromerzeugungssystem für Elektrofahrzeuge ist die Brennstoffzelle. Obwohl die Erfindung im folgenden anhand eines Brennstoffzellensystems beschrieben wird, beschränkt sich der Erfindungsgegenstand nicht auf dieses Ausführungsbeispiel, sondern kann für ein beliebiges lastabhängiges Stromerzeugungssystem für Elektrofahrzeuge angewendet werden.

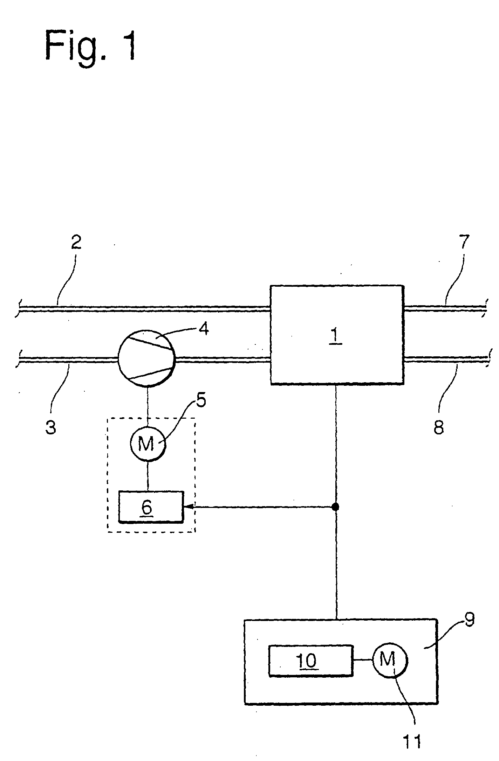

Der in Fig. 1 insgesamt mit 1 bezeichneten Brennstoffzelle, beispielsweise einer als PEM-Zelle bezeichnete Brennstoffzelle mit protonenleitender Membran, wird über eine erste Zuleitung 2 ein Brennmittel, beispielsweise Wasserstoffgas, zugeführt. Über eine zweite Zuleitung 3, in der ein Kompressor 4 angeordnet ist, wird der Brennstoffzelle 1 außerdem ein Oxydant, vorzugsweise Sauerstoff oder Umgebungsluft, unter Druck zugeführt. In der Brennstoffzelle 1 wird der Brennstoff an der Anode oxydiert, das Oxydant wird an der Kathode reduziert, wobei Anode und Kathode zur Vermeidung einer Knallgasreaktion zwischen dem Wasserstoff und dem Sauerstoff durch eine protonenleitende Membran voneinander getrennt sind. Bei dieser elektrochemischen Reaktion entsteht zwischen den beiden Elektroden eine Spannung. Durch Parallel- beziehungsweise Hintereinanderschaltung vieler solcher Zellen zu einem sogenannten Stack können Spannungen und Stromstärken erreicht werden, die zum Antrieb eines Fahrzeugs ausreichen.

Zum Antrieb des Kompressors 4 ist ein Elektromotor 5 vorgesehen. Mit Hilfe eines Kompressor-Umrichters 6 kann die Drehzahl *n*_{*K*} des Elektromotors 5 und somit auch des Kompressors 4 gesteuert oder geregelt werden. Über die Drehzahl *n*_{*K*} des Kompressors 4 kann der Oxydant-Massenstrom V_{L-ist} und damit die Leistung *P*_{*BZ*} der Brennstoffzelle 1 beeinflußt werden. Das Abführen der Gase aus der Anode und der Kathode erfolgt über Abströmleitung 7, 8. Zum Antrieb des Fahrzeugs ist eine Antriebseinheit 9, bestehend aus einem Fahrmotor-Umrichter 10 und einem Elektro-Fahrmotor 11, vorgesehen.

Um die Luftversorgung der Brennstoffzelle 1 vor der Leistungsbeziehungsweise Stromaufnahme der Antriebseinheit 9 anzusteuern und damit eine Begrenzung der Fahrpedalanforderung *FP* beim Beschleunigen möglichst zu vermeiden, wird beim erfindungsgemäßen Verfahren ein Strom-Sollwert *I*_{*FP*} für die Brennstoffzelle 1 durch eine zusätzliche Einrichtung im Fahrmotor-Umrichter 10 generiert. Aus der an die Antriebseinheit 9 weitergegebene Drehmomentanforderung *Md*_{*soll*} werden im Fahrmotor-Umrichter 10 Sollwerte für die Motorstrangströme *I*_{*MS-soll*}(*i*) des Elektro-Fahrmotors 11 ermittelt und daraus in Abhängigkeit von der Fahrmotor- beziehungsweise Zwischenkreisspannung U, U_{BZ}, der Leistungsstellertemperatur *T*_{*LS*} und dessen Wirkungsgrad η_{*LS*} ein Strom-Sollwert *I*_{*FP*} für die Brennstoffzelle 1 generiert. Aus diesem Strom-Sollwert *I*_{*FP*} wird dann ein Sollwert *n*_{*K-soll*} für die Kompressor-Drehzahl bestimmt und entsprechend eingestellt.

Der elektrischen Antriebseinheit 9 und der Luftversorgung werden die jeweiligen Sollwerte *I*_{*MS*}₋_{*soll*}(*i*), *I*_{*FP*} also praktisch zeitgleich zur Verfügung gestellt. Eine Begrenzung der Fahrleistung beim Beschleunigen aufgrund des Brennstoffzellensystems 1 tritt durch diese vorgelagerte Luftversorgung nicht mehr auf. Ebenso sind weniger Zellspannungsalarme U_{ZA} in der Brennstoffzelle 1 zu erwarten, was insgesamt ein besseres Fahrverhalten bedeutet.

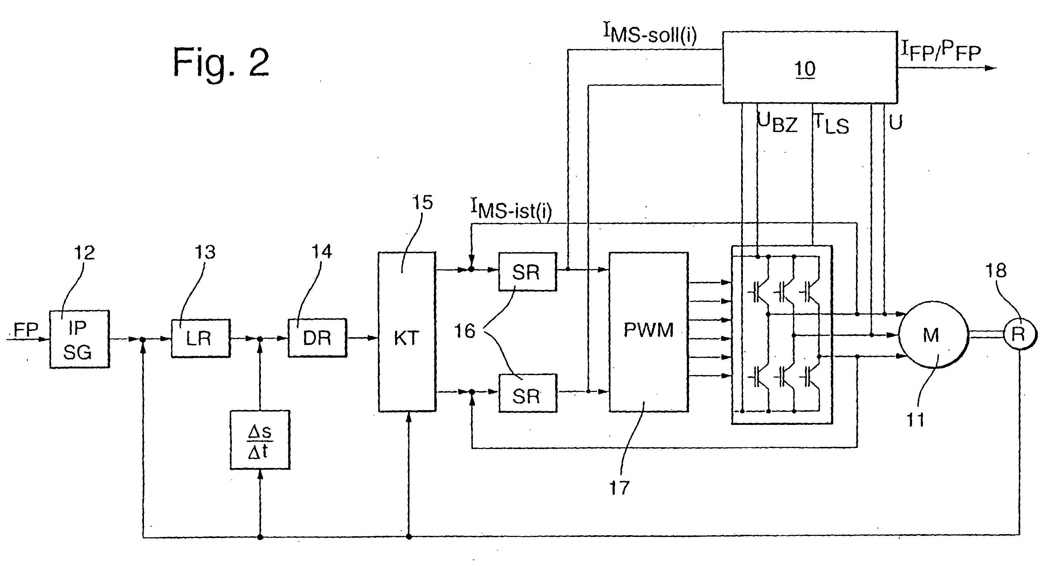

Antriebsregelungen für Drehstrom-Elektromotoren sind aus dem Stand der Technik, beispielsweise aus der Zeitschrift Elektronik, Heft 21/1994, Seite 58 ff., bekannt. Da außerdem die Antriebsregelung ansich nicht Gegenstand der Erfindung ist, wird hier nur kurz das Prinzip anhand von Fig. 2 erläutert. Die Antriebsregelung, bestehend aus Sollwert-Generator 12, Lageregler 13, Drehzahlregler 14, Koordinaten-Transformation 15, Phasenstromregler 16 und Pulsweitenmodulator 17, kann vorzugsweise im Fahrmotor-Umrichter 10 integriert und sowohl in analoger als auch in digitaler Bauweise ausgeführt werden. Ausgehend von der Fahrpedalanforderung *FP* werden in der Antriebsregelung Sollwerte für die Motorstrangströme *I*_{*MS-soll*}(*i*) ermittelt und dem Elektro-Fahrmotor 11 zugeführt.

Als Regelgrößen wird der Antriebsregelung neben den Istwerten der Motorstrangströme *I*_{*MS-ist*}(*i*) die mit Hilfe eines sogenannten Resolvers 18 erfaßten Werte für die Geschwindigkeit und für die absolute Winkelposition des Rotors des Elektro-Fahrmotors 11 zugeführt. Bei den üblichen feldorientierten Antriebsegelungen sind die Ist-Motorstrangströme *I*_{*MS-ist*}(*i*) und die jeweiligen Sollwerte *I*_{*MS-soll*}(*i*) der Motorstrangströme zirka alle 70 *µ*s verfügbar. Es ist daher möglich, den Sollwert für den von der Brennstoffzelle 1 für den Elektro-Fahrmotor 11 bereitzustellenden Strom *I*_{*FP*} aus den Sollwerten *I*_{*MS-soll*} (*i*) für die Motorstrangströme direkt im Fahrmotor-Umrichter 10 zu berechnen.

Erfindungsgemäß werden hierzu im Fahrmotor-Umrichter 10 die Motorstrang-Sollwerte *I*_{*MS-soll*}(*i*), die Motor- beziehungsweise Zwischenkreisspannung U, U_{BZ} und die Leistungsstellertemperatur *T*_{*LS*} erfaßt und daraus ein Strom-Sollwert *I*_{*FP*} oder ein Leistungs-Sollwert *P*_{*FP*} ermittelt. Um den Einfluß von Leistungsstellertemperatur *T*_{*LS*} und Leistungsstellerwirkungsgrad *η*_{*LS*} zu korrigieren können abgelegte Kennfelder zur Temperatur- und/oder Wirkungsgradkompensation eingesetzt werden.

Die Erfindung ist nicht auf das hier beschriebene Ausführungsbeispiel beschränkt, sondern bezieht sich auf alle bekannten Elektromotoren und entsprechende Antriebsregelungen.

## Patentansprüche

1. Verfahren zur Ermittlung eines Last-Sollwertes (*I*_{*FP*}) für ein lastabhängiges Stromerzeugungssystem (1-8), insbesondere für ein Brennstoffzellensystem, in einem Elektrofahrzeug, wobei ausgehend von einer Fahrpedalanforderung (FP) Sollwerte für die Motorstrangströme (*I*_{*MS-soll*}(*i*)) eines Elektro-Fahrmotors (11) ermittelt und laufend eingestellt werden und wobei ein Lastsollwert für das Stromerzeugungssystems ermittelt und laufend eingestellt wird,
**dadurch gekennzeichnet,**
**daß** der Lastsollwert (*I*_{*FP*}) für das Stromerzeugungssystem (1) aus den Sollwerten der Motorstrangströme (*I*_{*MS-soll*}(*i*)) des Elektro-Fahrmotors (11) generiert wird und daß die Sollwerte (*I*_{*MS-soll*}(*i*), *I*_{*FP*}) der Antriebseinheit (9) und dem Brennstoffzellensystem (1-8) praktisch zeitgleich zur Verfügung gestellt werden.

2. Verfahren nach Anspruch 1,
**dadurch gekennzeichnet,**
**daß** bei der Generierung des Last-Sollwertes (*I*_{*FP*}) eine Temperatur- und/oder Wirkungsgradkompensation erfolgt.

3. Verfahren nach Anspruch 2,
**dadurch gekennzeichnet,**
**daß** die Temperatur- und/oder Wirkungsgradkompensation anhand von entsprechenden Kennfeldern erfolgt.

4. Verfahren nach Anspruch 1,
**dadurch gekennzeichnet,**
**daß** als Stromerzeugungssystem ein Brennstoffzellensystem (1) verwendet wird.

5. Verfahren anch Anspruch 4,
**dadurch gekennzeichnet,**
**daß** als Last-Sollwert ein Soll-Stromwert (*I*_{*FP*}) oder ein Soll-Leistungswert (*P*_{*FP*}) für die Brennstoffzelle (1) vorgegeben wird.

## Claims

1. Method of determining an ideal load value (I_{FP}) for a load-dependent current generating system (1-8), in particular for a fuel cell system, in a battery vehicle, wherein on the basis of an accelerator requirement (FP) ideal values for the drive train currents (I_{MS-reference} (i)) of an electro-motor (11) are determined and continuously set and wherein an ideal load value for the current generating system is determined and continuously set,
**characterised in that**
the ideal load value (I_{FP}) for the current generating system is generated out of the ideal values of the drive train currents (I_{MS-reference}(i)) of the electro-motor vehicle (11) and that the ideal values (I_{MS-reference}(i), I_{FP}) are made available to the drive unit (9) and the fuel cell system (1-8) practically at the same time.

2. Method according to Claim 1
**characterised in that**
during the generation of the ideal load value (I_{FP}) temperature and / or degree of efficiency compensation takes place.

3. Method according to Claim 2
**characterised in that**
the temperature and / or degree of efficiency compensation takes place by reference to corresponding characteristic fields.

4. Method according to Claim 1
**characterised in that**
a fuel cell system is used as the current generating system.

5. Method according to Claim 4
**characterised in that**
as an ideal load value an ideal current value (I_{FP}) or an ideal power value (P_{FP}) is given for the fuel cell (1).

## Revendications

1. Procédé pour déterminer une valeur de consigne de la charge (I_{FP}) pour un système de production électrique dépendant de la charge (1-8), en particulier pour un système à cellules à combustible, dans un véhicule électrique, dans lequel, en partant d'une demande provenant de la pédale du conducteur (FP), on détermine des valeurs de consigne pour les courants de phase moteur (I_{MS-consigne} (i)) d'un moteur d'entraînement électrique (11) et on les agit est en permanence, et dans lequel on détermine une valeur de consigne de la charge pour le système de production électrique et on l'ajuste en permanence,
**caractérisé en ce que** la valeur de consigne (I_{FP}) de la charge pour le
système de production électrique (1) est générée à partir des valeurs de consigne des courants de phase moteur (I_{MS-consigne}(i)) du moteur d'entraînement électrique (11), et **en ce que** les valeurs de consigne (I_{MS-} _{consigne}(i), I_{FP}) sont mises à disposition de l'unité d'entraînement (9) et du système à cellules à combustible (1-8) pratiquement simultanément.

2. Procédé selon la revendication 1,
**caractérisé en ce que** lors de la production de la valeur de consigne (I_{FP}) de la charge, on effectue une compensation de température et/ou d'efficacité.

3. Procédé selon la revendication d',
**caractérisé en ce que** la compensation de température et/ou d'efficacité a lieu à l'aide de champs de caractéristiques correspondants.

4. Procédé selon la revendication 1,
**caractérisé en ce que** l'on utilise à titre de système de production électrique un système à cellules à combustible (1).

5. Procédé selon la revendication 4,
**caractérisé en ce que** l'on impose à titre de valeur de consigne pour la charge une valeur de courant de consigne (I_{FP}), ou une valeur de puissance de consigne (P_{FP}) pour la cellule à combustible (1).
